# EUROPEAN PATENT SPECIFICATION

(11) **EP 1 259 054 B1**
(45) Date of publication and mention of the grant of the patent: **18.04.2007**
(21) Application number: 02290918.8
(22) Date of filing: 12.04.2002
(51) Int. Cl.: H04M 3/24, H04Q 3/545, G06F 11/00, G06F 11/36

(54) **Methods for testing the control software of a telecommunication equipment provided with a distributed type control**
Verfahren zum prüfen der Steuersoftware eines Telekommunikationsgerätes mit einer verteilten Steuerung
Méthode pour tester le logiciel de commande d'un dispositif de télécommunication pourvu d'une commande du type distribuée

(30) Priority: 16.05.2001 IT MI20010997
(43) Date of publication of application: 20.11.2002
(73) Proprietor: Alcatel Lucent, 75008 Paris (FR)
(72) Inventor: Mirelli, Giacomo, 20061 Carugate (Milano) (IT); Sironi, Luciano, 23870 Montevecchia (Lecco) (IT); Rodella, Vincenzo, 20066 Melzo (Milano) (IT)
(74) Representative: Colombo, Stefano Paolo

(56) References cited:
- US-A- 5 022 028
- US-A- 5 115 502
- US-A- 5 805 867

## Description

The present invention relates to methods for testing the control software of a control system of distributed type of a telecommunication equipment, and additionally to a software product, to a memory, and to a computer which allow their implementation.

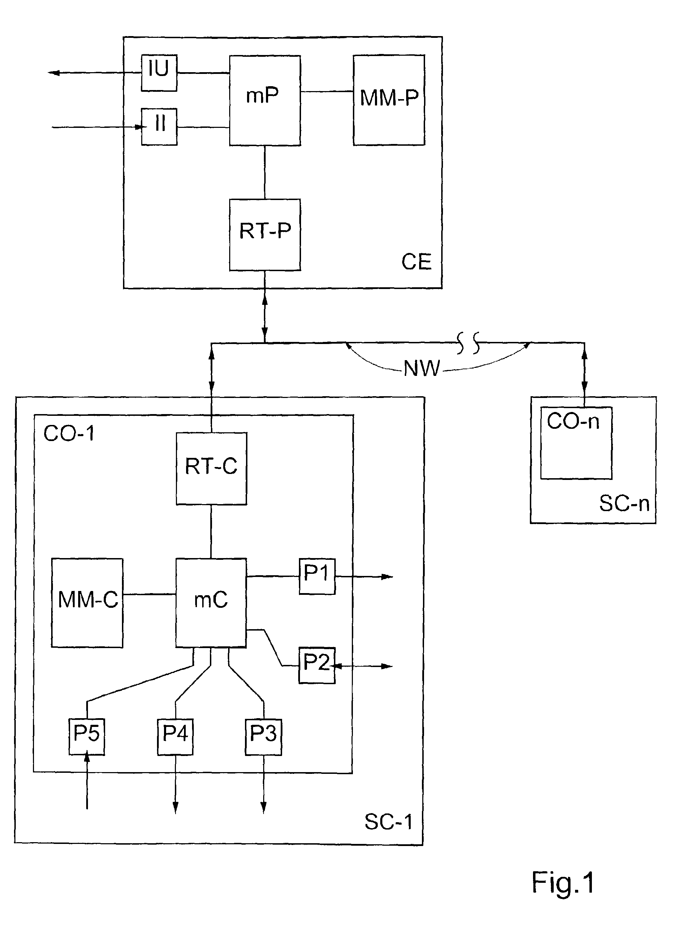

The modern telecommunication equipment usually consists of a plurality of boards, referenced by SC-1 ... SC-n in Fig.1, connected together, usually, through a bus (not represented in Fig.1); each board SC realizes its own functions independently from the others and communicates with the other boards when it is required by the operation; such equipment realizes a distributed type operation.

All the telecommunication equipments of a certain complexity require a control system which allows an operator to check the status and to control the operation; naturally, it is desirable that the control system be equipped with a user-friendly user interface.

It is quite usual that, when the operation of the equipment is of distributed type, also the control system be of distributed type; typically, for each SC board of the equipment a corresponding control subsystem is provided, which shall be later called "controlled entity", referenced by CO in Fig.1.

With reference to Fig.1, such a control system of distributed type comprises, generally, a controller entity CE and a plurality of controlled entities CO-1 ... CO-n; the entities are connected together and communicates through, for example, a bus communication network NW.

The controller entity CE consists of an independent control board or a control computer, often a PC [Personal Computer]; the controller entity CE comprises a processor mP (often a microprocessor) and, in communication with this, memory means MM-P and communication means RT-P; it executes its own control software which, essentially, realises the exchange of control information with the controlled entities CO and realises the global control of the equipment in relation to, among other thing, the operator's behaviour; the controller entity CE can also realize the user interface and, for this purpose comprises an output interface IU and an input interface II, both connected to the mP processor.

The controlled entity CO is, very frequently, realised internally to the corresponding SC board of the equipment; each CO entity comprises a processor mC (often a microcontroller) and, in communication with this, memory means MM-C, a plurality of peripherals (in Fig.1, for example, five, referenced by P-1, P-2, P-3, P-4, P-5) and communication means RT-C; it executes its own control software which, essentially, realises the exchange of control information with the controller entity CE and realises the control of the board SC, that is, it detects the status of the board SC by reading from the P peripherals (in Fig.1, only the P-2 and P-5 peripherals are read) and drives the operation of the SC board by writing onto the P peripherals (in Fig.1, only the P-1, P-2, P-3 and P-4 peripherals are written).

Both the controller entity and the controlled entities can be of redundant type for a better reliability of the control system; for example, the entity can comprise a primary unit and a reserve unity which begins to run when the primary unit is in error.

The realization of such a control system can be divided into the following activities:
- definition of system requirements,
- definition of control architecture,
- design and development of processing algorithms,
- design and development of controller entity hardware,
- design and development of controlled entities hardware,
- design and development of control software of controller entity,
- design and development of control software of controlled entities,
- test of single entities,
- global test of system.

In order to cut the realization time, it is necessary to develop such activities, as far as possible, at the same time by using different teams of designers.

In order to develop the test activities of the single entities at the same time, it is necessary to simulate the behaviour of the other entities; in fact, in general, their design, development and test shall not be completed.

Usually, each team of designers develops one or more simulators fit for their purposes; generally, these simulators are of software type

This approach is uneconomical and risky; uneconomical as the simulator thus developed can not be, generally, reused for other projects; risky as it is very difficult to be sure that the simulator simulates accurately the behaviour of the other entities.

An apparatus for verification of target software loaded in a target computer is known from US-A-5022028. The apparatus includes communication and monitoring circuits inserted in the target computer and in a host computer which is programmed to direct operation of target software tests through the communication and monitoring circuits. The communication and monitoring circuits transmit external stimuli to the target software in a non-intrusive manner. The communication and monitoring circuits also capture target software output data for comparison with reference data stored in the host computer. The external stimuli including test instructions may be either recorded in a manual recording session or may be generated in the host computer. Similarly, the target software output reference data may be either generated in the host computer or recorded in a manual session.

Object of the present invention is to provide a methodology for testing the control software of a telecommunication equipment which does not show the above mentioned problems.

This object is substantially achieved by the methods having the functionalities respectively set forward in claims 1 and 4; further advantageous aspects of the present invention are set forward in the dependent claims.

The basic idea of the present invention is to use a software fit for simulating the behaviour of a generic entity of the control system, and fit for specialisation on the basis of specialisation information which specify data and relations characteristic of the control system.

Such an idea is practically realisable as it has been possible to identify a model which is applicable to the control systems of distributed type for telecommunication equipments. The different control systems, after having being modelled, differ in a limited number of parameters; such parameters can be described through a simple language which can be interpreted by the simulation software.

The present invention can be generally applied to telecommunication equipments and this application is particularly advantageous for transmission equipments such as radio-relay systems.

In fact, to a specific family or generation of radio-relay systems belong equipments which have a common technology but which remarkably differ owing to the type of application and therefore not only owing to number but also to the structure and operation of the component boards. Therefore, their control systems are remarkably different and the possibility of reusing already developed simulators is extremely limited.

The present invention shall become more apparent thanks to the following description to be read in combination with the attached drawings, in which:
Fig.1 shows the quite simplified block diagram of a telecommunication equipment, wherein the control system is particularly evidenced,
Fig.2 shows the block diagram of an entity of a control system connected to a computer, according to the present invention, in order to carry out the test of the control software, and
Fig.3 shows the block diagram of a simulation software according to the present invention.

Before proceeding to describe in detail the invention, it is important to describe the model which is the basis for the possibility of its realisation.

The present invention is not limited by the specific model which shall be later described: it is in fact possible to identify many models which are similar to the present model and applicable to control systems of equipments, and to use the methods of the present invention even if the control system has been modelled by one of these similar models.

With reference to Fig.1, a control system of an equipment comprises a controller entity CE and a plurality of controlled entities CO-1 ... CO-n.

An equipment transmits and receives both internally and externally physical signals of different nature: optical and electrical, analog and digital, ... The whole of all these signals specialises the equipment. The control of the equipment corresponds to the control of its signals; generally, it is not necessary and/or possible to control all the signals and, therefore, the control is limited to a subset of these, that are called controllable physical signals.

To the controllable signals of the equipment correspond the controllable physical data of the equipment; such a conversion is carried out by the peripherals P of the control system; according to the signal and therefore to the relevant data, the peripheral has the task to read the data and to generate the signal or to detect the signal and to generate the data. The control system results therefore primarily characterised by its physical controllable data.

Each controlled entity CO comprises a certain number of peripherals P, which are associated to the controllable physical data. The controlled entity CO results therefore characterised by its controllable physical data, each of which can be characterised by a certain number of parameters, such as type and size.

The controlled entity CO realises the exchange of its controllable physical data with the controller entity CE. The controlled entity CO results therefore further characterised by the use relations which specify which of the controllable physical data are fit to be transmitted by the controlled entity CO (that is, belonging to the "flow of SET" and therefore called "physical data of SET"), and which of the controllable physical data are fit to be received by the controlled entity CO (that is, belonging to the "flow of GET" and therefore called "physical data of GET").

The control system can also process controllable logical data; these represent a view of the equipment most appropriate for the operator, that is independent from several constructive and implementation details of the equipment; the controllable logical data are related to the controllable physical data through association relations (sometimes very complex) characteristic of the control system.

The controller entity CE exchanges the physical data with all the controlled entities CO of the control system; additionally, it can associate the physical data with the eventual logical data according to the association relations. The controller entity CE can therefore result characterised by its controllable logical data and its association relations.

The types of data considered by the present model are:
**ALARM :** field of one bit which identifies the status of an alarm,
**STATUS :** field of one or more bits which identify a well-defined status of the equipment (permanent or temporary),
**MEASURE :** field generally of more bits which identifies the result of an active measure; if the measure is not active, it contains the result of the last measurement carried out,
**VALUE :** field of one or more bits which identifies permanent configuration values of the equipment,
**CONTROL :** field of one or more bits which identifies a request of manual temporary forcing of values or specific functionalities of the equipment,
**ECHO** field generally of one bit which identifies the presence of a specific manual forcing in progress,
**IMPULSIVE :** field generally of one bit which identifies a synchronisation event to activate, upon request, automatic functionalities,
**CRITERION :** field generally of one bit which identifies an event used by the state algorithms as evolutive key,
**COMMAND :** field generally of one bit which identifies the status of a peripheral, generally used as monitoring.

Among the peripherals which handle these data we can mention the following : DAC, ADC, Buffer, Shift Register, UART, Counter, Encoder, Decoder, Latch, Operational Amplifier, RAM, EEPROM.

The controllable physical or logical data are organised into registers all having the same size (for ex. 32, 48 or 64 bits). Therefore, each data shall be identified by the register identification number where it is contained, by its position within the register and by its size; additionally, there may be data display attributes, for example "help of data" (a text string which specifies the meaning and/or the use of the data) and the "colour of data " (a number).

Each bit of every register requires an initial value which is to be assigned to the bit when the control system begins its operation.

The present model reduces the whole control to the following ten (elementary) control actions:
**ACTION 1 :** recognition by the controller entity CE of the controlled entities CO which are part of the control system.
**ACTION 2 :** recognition by the controller entity CE of the physical data of GET and SET of each controlled entity CO.
**ACTION 3** : preparation of physical data of GET by the controller entity CE by association of the logical data.
**ACTION 4** : writing by the controller entity CE of the physical data of GET into the controlled entities CO.
**ACTION 5 :** transmission of physical data of GET from the controller entity CE to the controlled entities CO through an adequate protocol of communication.
**ACTION 6 :** writing into the peripherals by the controlled entities CO due to new values of physical data of GET received.
**ACTION 7 :** continuous reading from the peripherals by the controlled entities CO and corresponding writing by the controlled entities CO of the new physical data of SET into the controller entity CE.
**ACTION 8 :** transmission of the physical data of SET from the controlled entities CO to the controller entity CE through an adequate protocol of communication.
**ACTION 9** : preparation of the logical data by the controller entity CE by association of physical data.
**ACTION 10 :** access to logical or physical data.

These control actions of the system correspond to: control actions carried out only by the controller entity CE, control actions carried out by one or more controlled entities CO, control actions carried out by the controller entity CE and by one or more controlled entities CO.

The ten actions shall be briefly explained hereinafter as implemented in the present model.

### ACTION 1

The controller entity CE sends to the controlled entities CO an identification call. The controlled entities answer by sending their own identification number and eventual other information such as code, type and function of the board which have the task of controlling, and their hardware and software version.

### ACTION 2

The controller entity CE starts a submission phase with all the controlled entities CO identified.

Upon request, the controlled entities CO send to the controller entity CE the identification numbers, types, sizes and the belonging to the flow (of GET or SET) of all their physical data.

Upon a further request, the controlled entities CO send to the controller entity CE the actual values of all the physical data of SET.

### ACTION 3

At each variation of logical data, the controller entity CE identifies the association relation or relations which involve the logical data, it interprets them and updates the value of the physical data of GET involved by the relation.

### ACTION 4

At each variation of physical data of GET in the controller entity CE, the controller entity CE identifies which controlled entity or which controlled entities use the physical data of GET, and "writes" the physical data of GET into the controlled entity CO by triggering ACTION 5.

### ACTION 5

The controller entity CE sends a register to a controlled entity CO by using the communication protocol of the NW network.

The controlled entity CO receives the register by the controller entity CE by using the communication protocol of the NW network.

### ACTION 6

At the reception of a register from the controller entity CE, the controlled entity CO identifies the physical data of GET received, updates the data with a new value, and writes them into the relevant peripherals according to the modalities required by the same peripherals.

### ACTION 7

Periodically, according to a period characteristic of each peripheral, each controlled entity CO reads the physical data of SET from the relevant peripherals, according to the modalities required by the same peripherals, updates the data having a new value and "writes" them into the controller entity CE by triggering ACTION 8 with a priority related to the period characteristic of the data.

### ACTION 8

The controlled entity CO selects a register to be sent to the controller entity CE on the basis of the priority.

The controlled entity CO sends the register to the controller entity CE by using the communication protocol of the NW network.

The controller entity CE receives the register from the controlled entity CO by using the communication protocol of the NW network.

### ACTION 9

At the reception of a register from a controlled entity CO, the controller entity CE identifies the physical data of SET received, updates the data having a new value, identifies the association relation or relations which involve the physical data, it interprets them and updates the logical data.

### ACTION 10

Execution by the controller entity CE of software requests of reading or writing of whichever logical or physical data.

With the above described model (or with similar models) it is possible to model the whole control system of an electronic equipment, in particular the distributed control system of a telecommunication equipment.

This model (or a similar model) can also be advantageously used during the design phase of the control system, in particular when the detailed specifications of the control software are defined. The use of this model during the design phase shall have, generally, an influence on the structure and on the operation of the software developed.

Each team of designers shall use the specifications referring to the entity of their own competence for designing and developing the same, and the specifications referring to the other entities for testing the software developed.

This invention shall be described hereinafter with reference to Fig.1,Fig.2,Fig.3; such a reference is not to be understood as a limitation.

The test of the control software of a controlled entity CO serves to check the correct operation of the control software with relation to four main aspects:
- the management of the peripherals of such controlled entity,
- the physical levels of the communication protocol,
- the logical levels of the communication protocol,
- the realisation of the control actions.

A first method, according to the present invention, for testing the control software of one of the controlled entities CO-1 ... CO-n, comprises the steps of:
a) activating such a controlled entity CO and executing the control software to be tested,
b) arranging and activating a computer EL provided with communication means RT-E able to communicate with such a controlled entity CO,
c) identifying the controllable physical data characteristic of such a controlled entity CO,
d) identifying the use relations characteristic of such a controlled entity CO which specify which physical data are fit for being transmitted by the entity CO and which physical data are fit for being received by the entity CO,
e) loading the computer EL with a simulation software fit for simulating the behaviour of a generic controlled entity,
f) supplying the simulation software with specialisation information which specify the physical data identified and the use relations identified and
g) executing the simulation software specialised on the basis of such specialisation information.

Such a first method is particularly fit for the test concerning the first two aspects.

A very simple method of supplying the simulation software with the use relations inverted is to supply the use relations non inverted jointly to an additional information which indicates to the simulation software the need of carrying out an inversion.

If the simulation software is fit for simulating the behaviour only of controlled entities, such an additional information can also be omitted, if the simulation software is arranged to always operate an inversion of the use relations; in this case, the specialisation occurs, partly, before the loading of the simulation software.

A second method, according to the present invention, for testing the control software of one of the controlled entities CO-1 ... CO-n, comprises the steps of:
a) activating such a controlled entity CO and executing the control software to be tested,
b) arranging and activating a computer EL provided with communication means RT-E able to communicate with such a controlled entity CO,
c) identifying the controllable physical data characteristic of such a controlled entity CO,
d) identifying the use relations characteristic of such a controlled entity CO which specify which physical data are fit for being transmitted by the entity CO and which physical data are fit for being received by the entity CO,
e) loading the computer EL with a simulation software fit for simulating the behaviour of a generic controller entity,
f) supplying the simulation software with specialisation information which specify the physical data identified and the use relations identified but inverted in the communication sense, and
g) executing the simulation software specialised on the basis of such specialisation information.

According to this second method, it is possible to provide further the steps of:
h) identifying the controllable logical data characteristic of the controller entity CE, and
identifying the association relations characteristic of the controller entity CE which specify the association between physical and logical data;
naturally, in this case, the logical data identified and the association relations specified are supplied to the simulation software as further specialisation information. In such a manner, the simulation can be executed on the basis of data which can be easier interpreted by an operator.

Such a second method is particularly fit for the test regarding the last two aspects.

Both methods can be employed one after the other: first of all, the first method is used to fix all which concerns the management of peripherals and physical levels of communication protocol, and later, the second method is used to fix all which concerns the logical levels of the communication protocol and the realisation of the control actions.

The test of the control software of the controller entity CE serves to check the correct operation of the control software for what concerns three main aspects:
- the physical levels of the communication protocol,
- the logical levels of the communication protocol,
- the generation of control actions as a consequence of the operator's commands.

A third method, according to the present invention, for testing the control software of a controller entity, comprises the steps of:
a) activating the controller entity CE and executing the control software to be tested,
b) arranging and activating a computer EL provided with communication means RT-E able to communicate with the controller entity CE,
c) identifying the controllable physical data characteristic of all the controlled entities CO-1 ... CO-n,
d) identifying the use relations characteristic of all the controlled entities CO-1 ... CO-n which specify which physical data are fit for being transmitted by each controlled entity CO and which physical data are fit for being received by each controlled entity CO,
e) loading the computer EL with a simulation software fit for simulating the behaviour of a generic controlled entity,
f) supplying the simulation software with specialisation information which specify the union of the physical data identified and the union of the use relations identified, and
g) executing the simulation software specialised on the basis of such specialisation information.

According to this third method, the simulation software simulates a virtual controlled entity which is the union of all the controlled entities CO-1 ... CO-n of the control system.

According to this third method, the execution of the control software to be tested and the execution of the simulation software can occur respectively on the hardware of the controller entity CE and on a computer EL. This first case is fit for the test regarding all the aspects.

According to this third method, the execution of the control software to be tested and the execution of the simulation software can occur on the same computer and the communication between said softwares can occur exclusively through software protocols. This second case is particularly fit for the test regarding the last aspect, as the simulator communicates with the controller entity without using the communication protocol of the control system, but using the communication procedures (standard and reliable) between processes/tasks resident on the same computer.

Both test conditions can be used one after the other: first of all, only a computer is used to fix all which concerns the generation of control actions, and later, two computers are used to fix all which concerns the communication protocol.

The simulation software can be developed as a single program. But it is preferable that the simulation software used in these methods be modular and each software module be dedicated to particular functions of the software.

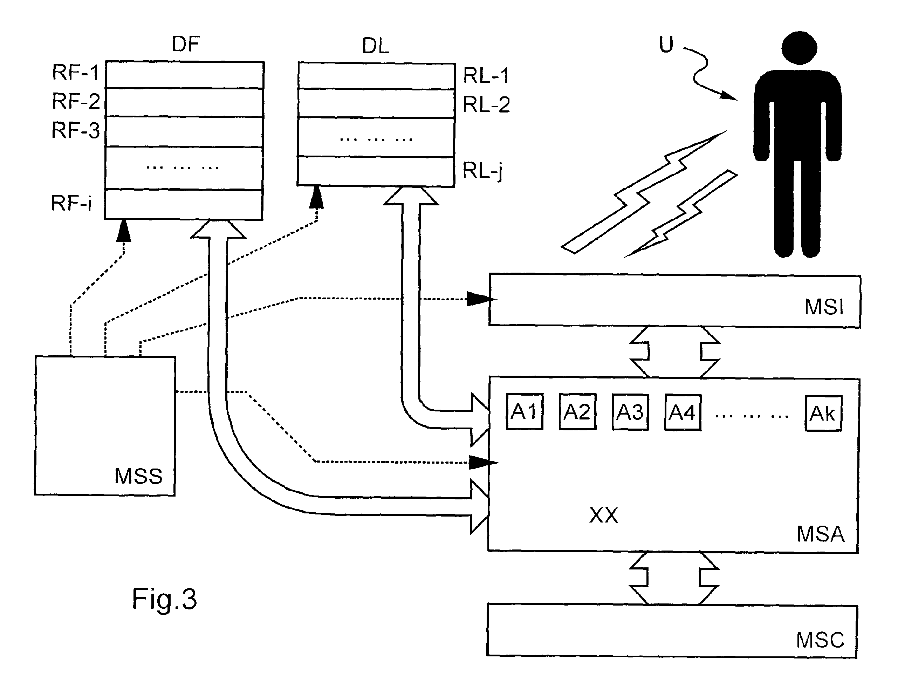

In the description of the simulation software, a particular reference is made to Fig.3 which shows the block diagram of an embodiment of the simulation software according to the present invention; a user of the simulation software is indicated by U; by DF and DL are indicated respectively the physical and the logical data characteristic of the entity that the simulation software is simulating, more precisely the memory areas occupied by such data.

The specialisation, both of the single program and of the different modules, can be realized in two manners: either by considering the specialisation information only once (typically during the initial phase) and executing it (completely) or by considering the specialisation information when it is requested (during the whole execution of the simulation software), interpreting and executing it (within the limits of the needs).

For all these three methods, the simulation software can advantageously be provided with a MSI software module of user interface fit for allowing the writing and/or the reading by the user U of controllable data, of physical and/or logical type. In such a manner, the user can easily establish the simulation strategy, by choosing of controlling the status and/or of checking the operation of the equipment and/or of its boards, which is the contrary of what happens during the standard operation, but also of checking the status and/or of controlling the operation of the equipment and/or of its boards, as it happens during the standard operation.

Also this MSI software module of user interface can be fit for being specialised on the basis of controllable data, of physical and/or logical type, supplied to the simulation software after its activation. The MSI software module of user interface can use the eventual display attributes of data. In such a manner, the user interface can become easier to be used.

Thanks to the model described above, it has been proved how it is possible that the control system handles physical data belonging to a predetermined and limited number of types and sizes. The three methods mentioned can advantageously avail themselves of this characteristic of the control system by providing that the simulation software be able to handle physical data having such characteristics; in fact, the management of data results simplified.

In this case, the simulation software, during the initial phase of specialisation, can advantageously group, in particular, the physical data DF into registers RF-1, RF-2, RF-3 ... RF-i all of the same size. In such a manner, the exchange of the control information results easier as based on equal registers and not on data showing a different format.

Nevertheless, it is advantageous for the uniformity of the data processing to group also the logical data DL into registers RL-1, RL-2 ... RL-j all of the same size, corresponding to the size of RF registers of DF physical data.

Thanks to the model described above, it is has been proved how it is possible that the control system carries out the control of an equipment by using a predetermined and limited number of types of actions of the control system. The three methods described above can advantageously avail themselves of this characteristic of the control system by providing that the simulation software comprises a software applicative module MSA able to carry out control actions A-1, A-2, A-3, A-4 ... A-k of the entities in a predetermined and limited number; in fact, the software results simplified and more testable.

The simulation softwares used in the three methods can advantageously comprise a communication software module MSC fit for handling the communication with other control entities CE,CO; in fact, the communication aspects of the simulation software can be separately tested, additionally, it results easier to adapt the simulation software according to different types of communication (both under the physical and logical point of view) used in control systems and different equipments or during phases of different tests.

The simulation softwares used in the three methods described above provide with a specialisation; in this respect, it is advantageous that these methods comprise an interpretation software module MSS fit for reading the specialisation information, for interpreting it and causing the specialisation.

Such a MSS module can operate only once during the initial phase or, more advantageously, it can remain active during the whole execution of the simulation software; in this latest case, it is advantageous to provide that, when an operation subject to specialisation is necessary, the MSS module is involved, which interprets the specialisation information and determines the necessary specialisation of the operation.

In Fig.3, the MSS module has been linked through short dashes lines to the MSI and MSA modules and to the DF physical and DL logical data, in order to indicate only that these latest require a specialisation by the MSS module; the diagram in Fig.3 does not intend to specify how this specialisation phase occurs.

The above described test methods provide, for their implementation, the use of corresponding simulation software products; also these software products fall into the scope of the present invention.

These simulation softwares shall be, generally, loaded into magnetic or optical or semiconductor memories for computer; also these memories fall into the scope of the present invention.

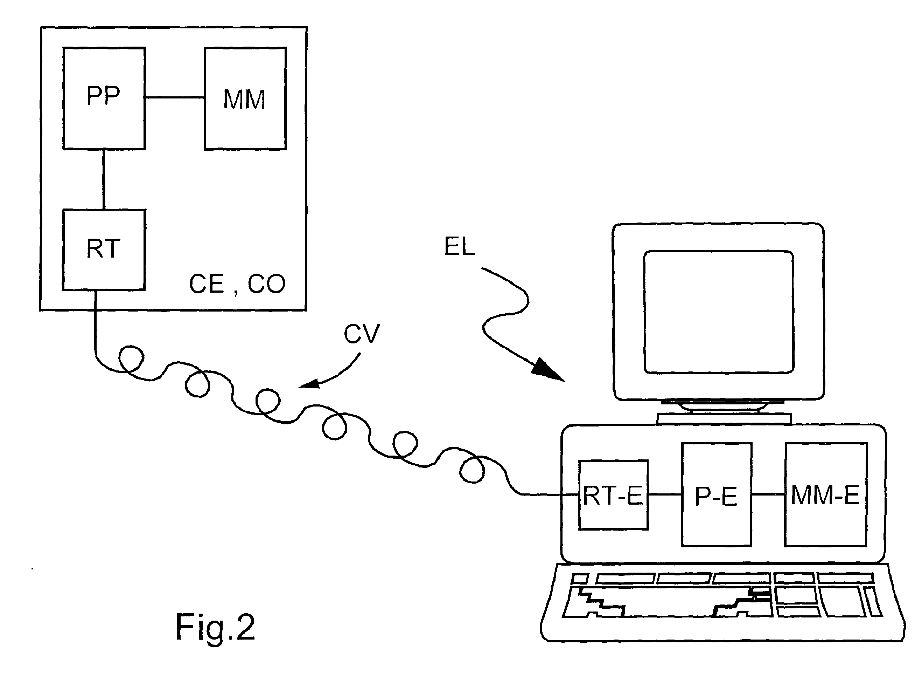

Finally, with reference to the Fig.2, the present invention regards also to a computer EL for testing the control software of control systems of telecommunication equipment through the above mentioned methods, comprising at least:
- a P-E processor,
- MM-E memory means, and
- RT-E communication means for communicating with the CE and/or CO entities of the control system;
wherein said MM-E memory means are loaded with a software fit for simulating the behaviour of a generic CE and/or CO entity of the control system, and fit for specialisation on the basis of specialisation information which specify data and relations characteristic of the control system.

The MM-E memory means comprise generally both semiconductor memory devices and one or more magnetic and/or optical disks.

In Fig.2, the EL computer is connected to an entity CE or CO of the control system through a CV cable. In the entity CE,CO are put into evidence a generic PP processor, some generic MM memory means and generic RT communication means.

From what has been described it is clear that the present invention supplies testing tools and methods of great flexibility and easy to use and that allow also very complex tests.

## Claims

1. Method for testing the control software of a controlled entity (CO) of a control system of a telecommunication equipment, wherein the control system comprises a controller entity (CE) and a plurality of controlled entities (CO-1 ... CO-n), being the entities (CE,CO) in communication between each other (NW), comprising the steps of.
a) activating said controlled entity (CO) and executing the control software to be tested,
b) arranging and activating a computer (EL) provided with communication means (RT-E) able to communicate with said controlled entity (CO),
c) identifying the controllable physical data characteristic of said controlled entity (CO),
d) identifying the use relations characteristic of said controlled entity (CO) which specify which physical data are fit for being transmitted by said entity (CO) and which physical data are fit for being received by said entity (CO),
e) loading said computer (EL) with a simulation software fit for simulating the behaviour of a generic controlled entity,
f) supplying the simulation software with specialisation information which specify the physical data identified and the use relations identified, and
g) executing the simulation software specialised on the basis of said specialisation information.

2. Method of claim 1 wherein the step f) comprises supplying the simulation software with specialisation information which specify the physical data identified and the use relations identified but inverted in communication sense.

3. Method as claimed in claim 1, comprising further the steps of:
h) identifying the controllable logical data characteristic of said controller entity (CE), and
i)identifying the association relations characteristic of said controller entity (CE) which specify the association between said physical and said logical data;
wherein said specialisation information specify further the logical data identified and the association relations identified.

4. Method for testing the control software of a controller entity (CE) of a control system of a telecommunication equipment, wherein the control system comprises a controller entity (CE) and a plurality of controlled entities (CO-1 ... CO-n), being the entities in communication between each other (NW), and comprising the steps of:
a) activating said controller entity (CE) and executing the control software to be tested,
b) arranging and activating a computer (EL) provided with communication means (RT-E) able to communicate with said controller entity (CE),
c) identifying the controllable physical data characteristic of all the controlled entities (CO-1 ... CO-n),
d) identifying the use relations characteristic of all the controlled entities (CO-1 ... CO-n) which specify which physical data are fit for being transmitted by each controlled entity (CO-1 ... CO-n) and which physical data are fit for being received by each controlled entity (CO-1 ... CO-n),
e) loading said computer (EL) with a simulation software fit for simulating the behaviour of a generic controlled entity,
f) supplying the simulation software with specialisation information which specify the union of the physical data identified and the union of the use relations identified, and
g) executing the simulation software specialised on the basis of said specialisation information.

5. Method as claimed in claim 4, wherein the execution of the control software to be tested and the execution of the simulation software occur on the same computer and the communication between said softwares occurs exclusively through software protocols.

6. Method as claimed in any of claims 1-4, wherein said simulation software is provided with a user interface software module (MSI) fit for allowing the writing and/or the reading by the user (U) of controllable data.

7. Method as claimed in claim 6, wherein said user interface software module (MSI) is fit for being specialised on the basis of said controllable data identified and supplied to the simulation software after its activation.

8. Method as claimed in any of claims 1-4, wherein said simulation software is able to handle physical data of a predetermined and limited number of types and sizes.

9. Method as claimed in claim 8, wherein said simulation software, during the initial specialisation phase, groups the physical data into registers (RF-1 ... RF-i), all of the same size.

10. Method as claimed in any of claims 1-4, wherein said simulation software comprises an applicative software module (MSA) able to execute control actions (A-1 ... A-k) of the entities (CE,CO) of a predetermined and limited number of types.

11. Method as claimed in any of claims 1-4, wherein said simulation software comprises a communication software module (MSC) fit for handling the communication with other control entities (CE,CO).

12. Method as claimed in any of the preceding claims, wherein said simulation software comprises an interpretation software module (MSS) fit for reading said specialisation information, interpreting it and causing the specialisation.

13. Software product fit for simulating the behaviour of a generic entity of a distributed control system of a telecommunication equipment, and loadable into computer memory means , comprising code portions for implementing the method according to any of claims from 1 to 12, fit for specialisation on the basis of specialisation information which specify data and relations characteristic of the control system.

14. Computer memory loaded with a software product according to claim 13.

15. Computer (EL) for testing the control software of a control system of a telecommunication equipment through the method according to any of claims from 1 to 12, wherein said control system comprises a controller entity (CE) and a plurality of controlled entities (CO-1 ... CO-n), wherein the entities are in communication between each other (NW), comprising:
• a processor (P-E),
• memory means (MM-E), and
• communication means (RT-E) able to communicate with the entities (CE,CO);
wherein said memory means (MM-E) is according to claim 14.

## Patentansprüche

1. Verfahren zum Prüfen der Steuersoftware einer gesteuerten Instanz (CO) eines Steuersystems eines Telekommunikationsgerätes, wobei das Steuersystem eine steuernde Instanz (CE) und eine Vielzahl von gesteuerten Instanzen (CO-1 CO-n) umfasst, wobei die Instanzen (CE, CO) untereinander in Kommunikation stehen (NW), umfassend die Schritte des:
a) Aktivierens der gesteuerten Instanz (CO) und Ausführens der zu prüfenden Steuersoftware;
b) Anordnens und Aktivierens eines Rechners (EL), der mit Kommunikationsmitteln (RT-E) ausgestattet ist, welche in der Lage sind, mit der gesteuerten Instanz (CO) zu kommunizieren;
c) Ermittelns der steuerbaren physikalischen Daten, die für die gesteuerte Instanz (CO) kennzeichnend sind;
d) Ermittelns der Nutzungsbeziehungen, die für die gesteuerte Instanz (CO) kennzeichnend sind und die spezifizieren, welche physikalischen Daten dafür geeignet sind, von der Instanz (CO) gesendet zu werden, und welche physikalischen Daten dafür geeignet sind, von der Instanz (CO) empfangen zu werden;
e) Ladens des Rechners (EL) mit einer Simulationssoftware, die dazu geeignet ist, das Verhalten einer allgemeinen gesteuerten Instanz zu simulieren;
f) Lieferns von Spezialisierungsinformationen an die Simulatiotissoftware, welche die ermittelten physikalischen Daten und die ermittelten Nutzungsbeziehungen spezifizieren; und
g) Ausführens der auf der Basis dieser Speziatisierungsinformationen spezialisierten Simulationssoftware.

2. Verfahren nach Anspruch 1, wobei Schritt f) das Liefern von Spezialisierungsinformationen an die Simutatbnssoftware umfasst, welche die ermittelten physikalischen Daten und die ermittelten Nutzungsbeziehungen spezifizieren, jedoch in ungekehrter Kommunikationsrichtung.

3. Verfahren nach Anspruch 1, weiter umfassend die Schritte des:
h) Ermittelns der steuerbaren logischen Daten, die für die steuernde Instanz (CE) kennzeichnend sind; und
i) Ermittelns der Assoziationsbeziehungen, die für die steuernde Instanz (CE) kennzeichnend sind und die den Zusammenhang zwischen physikalischen und logischen Daten spezifizieren;
wobei die Spezialisierungsinformationen ferner die ermittelten logischen Daten und die ermittelten Assoziationsbeziehungen spezifizieren.

4. Verfahren zum Prüfen der Steuersoftware einer steuernden Instanz (CE) eines Steuersystems eines Telekommunikationsgerätes, wobei das Steuersystem eine steuernde Instanz (CE) und eine Vielzahl von gesteuerten Instanzen (CO-1 ... CO-n) umfasst, wobei die Instanzen untereinander in Kommunikation stehen (NW), umfassend die Schritte des:
a) Aktivierens der steuernden Instanz (CE) und Ausführens der zu prüfenden Steuersoftware;
b) Anordnens und Aktivierens eines Rechners (EL), der mit Kommunikationsmitteln (RT-E) ausgestattet ist, welche in der Lage sind, mit der steuernden Instanz (CE) zu kommunizieren;
c) Ermittelns der steuerbaren physikalischen Daten, die für alle gesteuerten Instanzen (CO-1 ... CO-n) kennzeichnend sind:
d) Ermittelns der Nutzungsbeziehungen, die für alte gesteuerten Instanzen (CO-1 ... CO-n) kennzeichnend sind und die spezifizieren, welche physikalischen Daten dafür geeignet sind, von jeder gesteuerten Instanz (CO-1 ... CO-n) gesendet zu werden und welche physikalischen Daten dafür geeignet sind, von jeder gesteuerten Instanz (CO-1 ... CO-n) empfangen zu werden;
e) Ladens des Rechners (EL) mit einer Simulationssoftware, die dazu geeignet ist, das Verhalten einer allgemeinen gesteuerten Instanz zu simulieren;
f) Lieferns von Spezialisierungsinformationen an die Simulationssoftware, welche die Vereinigungsmenge der ermittelten physikalischen Daten und die Vereinigungsmenge der ermittelten Nutzungsbeziehungen spezifizieren; und
g) Ausführens der auf der Basis dieser Spezialisierungsiriformationen spezialisierten Simulationssoftware.

5. Verfahren nach Anspruch 4, wobei die Ausführung der zu prüfenden Steuersoftware und die Ausführung der Simulationssoftware auf demselben Rechner erfolgen und die Kommunikation zwischen den Softwaremodulen ausschließlich über Softwareprotokolle erfolgt.

6. Verfahren nach einem der Ansprüche 1 - 4, wobei die Simuiationssoftware mit einem Bentitzeroberfläche-Softwaremodul (MSI) ausgestattet ist, das dafür geeignet ist, das Schreiben und/oder Lesen der physikalischen und/oder logischen Daten durch den Benutzer (U) zu ermöglichen.

7. Verfahren nach Anspruch 6, wobei das Benutzeroberfläche-Softwaremodul (MSI) dafür geeignet ist, auf der Grundlage der physikalischen und/oder logischen Daten spezialisiert zu werden, die an die Simulationssoftware nach ihrer Aktivierung geliefert werden.

8. Verfahren nach einem der Ansprüche 1 - 4. wobei die Simulationssoftware in der Lage ist, physikalische Daten mit einer zuvor festgelegten und begrenzten Anzahl von Typen und Größen zu handhaben.

9. Verfahren nach Anspruch 8, wobei die Simulationssoftware während der anfänglichen Spezialisierungsphase die physikalischen Daten in Registern (RF-1 .. RF-1) zusammenfasst, die alle dieselbe Größe besitzen.

10. Verfahren nach einem der Ansprüche 1-4, wobei die Simutationssoftware ein Anwendungs-Softwaremodul (MSA) umfasst, das in der Lage ist, Steueraktionen (A-1 ... A-k) der Instanzen (CE, CO) in einer zuvor festgelegten und begrenzten Anzahl von Typen auszuführen.

11. Verfahren nach einem der Ansprüche 1 - 4, wobei die Simutationssoftware ein Kommunikations-Softwaremodul (MSC) umfasst, das dafür geeignet ist, die Kommunikation mit anderen Steuerinstanzen (CE, CO) zu handhaben.

12. Verfahren nach einem der vorhergehenden Ansprüche, wobei die Simulationssoftware ein Interpretations-Softwaremodul (MSS) umfasst, das dafür geeignet ist, die Spezialisierungsinformationen zu lesen, sie zu interpretieren und die Spezialisierung zu veranlassen.

13. Softwareprodukt, das zum Simulieren des Verhaltens einer allgemeinen Instanz eines verteilten Steuersystems eines Telekommunikationsgerätes geeignet ist und das in Speichermittel eines Rechners geladen werden kann, umfassend Codeteile zur Umsetzung des Verfahrens nach einem der Ansprüche 1 bis 12, geeignet für eine Spezialisierung auf der Grundlage der Spezialisierungsinformationen, welche die für das Steuersystem kennzeichnenden Daten und Beziehungen spezifizieren.

14. Speicher eines Rechners, der mit einem Softwareprodukt nach Anspruch 13 geladen wird.

15. Rechner (EL) zum Prüfen der Steuersoftware von Steuersystemen eines Telekommunikationsgerätes durch das Verfahren nach einem der Ansprüche 1 bis 12, wobei das Steuersystem eine steuernde Instanz (CE) und eine Vielzahl von gesteuerten Instanzen (CO-1 ... CO-n) umfasst, wobei die Instanzen untereinander in Kommunikation stehen (NW), umfassend:
• einen Prozessor (P-E);
• Speichermittel (MM-E); und
• Kommunikationsmittel (RT-E), die zur Kommunikation mit den Instanzen (CE, CO) in der Lage sind;
wobei die Speichermittel (MM-E) mit Anspruch 14 übereinstimmen.

## Revendications

1. Procédé pour tester le logiciel de commande d'une entité commandée (CO) d'un système de commande d'un équipement de télécommunication, dans lequel le système de commande comprend une entité de contrôleur (CE) et une pluralité d'entités commandées (CO-1 ... CO-n), étant les entités (CE, CO) en communication les unes avec les autres (NW), comprenant les étapes :
a) d'activation de ladite entité commandée (CO) et exécution du logiciel de commande à tester,
b) d'agencement et activation d'un ordinateur (EL) pourvu de moyens de communication (RT-E) en mesure de communiquer avec ladite entité commandée (CO),
c) d'identification des données physiques réglables caractéristiques de ladite entité commandée (CO),
d) d'identification des relations d'utilisation caractéristiques de ladite entité commandée (CO) qui spécifient quelles données physiques sont propres à être transmises par ladite entité (CO) et quelles données physiques sont propres à être reçues par ladite entité (CO),
e) de chargement dudit ordinateur (EL) avec un logiciel de simulation propre à simuler le fonctionnement d'une entité commandée générique,
f) de fourniture du logiciel de simulation en informations de spécialisation qui spécifient les données physiques identifiées et les relations d'utilisation identifiées, et
g) d'exécution du logiciel de simulation spécialisé sur la base desdites informations de spécialisation.

2. Procédé selon la revendication 1 dans lequel l'étape f) comprend la fourniture du logiciel de simulation en informations de spécialisation qui spécifient les données physiques identifiées et les relations d'utilisation identifiées mais inversées dans un sens de communication.

3. Procédé selon la revendication 1, comprenant en outre les étapes :
h) d'identification de données logiques réglables caractéristiques de ladite entité de contrôleur (CE), et
l) d'identification de relations d'association caractéristiques de ladite entité de contrôleur (CE) qui spécifient l'association entre lesdites données physiques et lesdites données logiques;
dans lequel lesdites informations de spécialisation spécifient en outre les données logiques identifiées et les relations d'association identifiées

4. Procédé pour tester le logiciel de commande d'une entité de contrôleur (CE) d'un système de commande d'un équipement de télécommunication, dans lequel le système de commande comprend une entité de contrôleur (CE) et une pluralité d'entités commandées (CO-1 ... CO-n), étant les entités en communication les unes avec les autres (NW), et comprenant les étapes :
a) d'activation de ladite entité de contrôleur (CE) et execution du logiciel de commande à tester,
b) d'agencement et activation d'un ordinateur (EL) pourvu de moyens de communication (RT-E) en mesure de communiquer avec ladite entité de contrôleur (CE),
c) d'identification des données physiques réglables caractéristiques de toutes les entités commandées (CO-1 .. CO-n),
d) d'identification des relations d'utilisation caractéristiques de toutes les entités commandées (CO-1 ... CO-n) qui specifient quelles données physiques sont propres à être transmises par chaque entité commandée (CO-1 ... CO-n) et quelles données physiques sont propres à être reçues par chaque entité commandée (CO-1 ... CO-n),
e) de chargement dudit ordinateur (EL) avec un logiciel de simulation propre à simuler le fonctionnement d'une entité commandée générique,
f) de fourniture du logiciel de simulation en informations de spécialisation qui spécifient l'union des données physiques identifiées et l'union des relations d'utilisation identifiées, et
g) d'exécution du logiciel de simulation spécialisé sur la base desdites informations de spécialisation.

5. Procédé selon la revendication 4, dans lequel l'exécution du logiciel de commande à tester et l'exécution du logiciel de simulation se produisent sur le même ordinateur et la communication entre lesdits logiciels se produit exclusivement grâce à des protocoles de logiciels,

6. Procédé selon l'une quelconque des revendications 1 à 4. dans lequel ledit logiciel de Simulation est pourvu d'un module logiciel d'interface utilisateur (MSI) propre à permettre l'écriture et/ou la lecture par l'utilisateur (U) de données réglables,

7. Procédé selon la revendication 6, dans lequel ledit module logiciel d'interface utilisateur (MSI) est propre à être spécialisé sur la base desdites données réglables identifiées et fournies au logiciel de simulation après son activation.

8. Procédé selon l'une quelconque des revendications 1 à 4, dans lequel ledit logiciel de simulation est en mesure de gérer des données physiques d'un nombre limité et prédéterminé de types et de tailles.

9. Procédé selon la revendication 8, dans lequel ledit logiciel de simulation, pendant la phase de spécialisation initiale, groupe les données physiques dans des registres (RF-1 ... RF-i), tous de la même taille,

10. Procédé selon l'une quelconque des revendications 1 à 4, dans lequel ledit logiciel de simulation comprend un module logiciel applicatif (MSA) en mesure d'exécuter des actions de commande (A-1 ... A-k) des entités (CE, CO) d'un nombre limité et prédéterminé de types

11. Procédé selon l'une quelconque des revendications 1 à 4, dans lequel ledit logiciel de simulation comprend un module logiciel de communication (MSC) propre à gérer la communication avec d'autres entités de commande (CE, CO),

12. Procédé selon l'une quelconque des revendications précédentes, dans lequel ledit logiciel de simulation comprend un module logiciel d'interprétation (MSS) propre à lire lesdites informations de spécialisation, les interpréter et amener la spécialisation,

13. Produit logiciel propre à simuler le fonctionnement d'une entité générique d'un système de commande distribuée d'un équipement de télécommunication, et chargeable dans des moyens de mémoire informatique, comprenant des parties de code pour mettre en oeuvre le procédé selon l'une quelconque des revendications 1 à 12, propre à la spécialisation sur la base des informations de spécialisation qui spécifient des données et des relations caractéristiques du système de commande.

14. Mémoire informatique chargée avec un produit logiciel selon la revendication 13.

15. Ordinateur (EL) pour tester le logiciel de commande d'un système de commande d'un équipement de télécommunication grâce au procédé selon l'une quelconque des revendications 1 à 12, dans lequel ledit système de commande comprend une entité de contrôleur (CE) et une pluralité d'entités commandées (CO-1 ... CO-n), dans lequel les entités sont en communication les unes avec les autres (NW), comprenant
- un processeur (P-E),
- des moyens de mémoire (MM-E), et
- des moyens de communication (RT-E) en mesure de communiquer avec les entités (CE, CO),
dans lequel lesdits moyens de mémoire (MM-E) sont selon la revendication 14.
